(19) Europäisches Patentamt
European Patent Office
Office européen des brevets

(11) **EP 3 712 600 B1**

(12) **EUROPÄISCHE PATENTSCHRIFT**

(45) Veröffentlichungstag und Bekanntmachung des Hinweises auf die Patenterteilung:
**12.10.2022 Patentblatt 2022/41**

(21) Anmeldenummer: **19209726.9**

(22) Anmeldetag: **18.11.2019**

(51) Internationale Patentklassifikation (IPC):
**G01N 21/88** (2006.01) **G01N 21/89** (2006.01)

(52) Gemeinsame Patentklassifikation (CPC):
**G01N 21/8803; G01N 21/8806; G01N 21/8914;**
G01N 2021/8825; G01N 2021/8838;
G01N 2021/8908; G01N 2021/8918

(54) **VERFAHREN UND VORRICHTUNG ZUR INSPEKTION DER OBERFLÄCHE EINES SICH BEWEGENDEN BANDS**

METHOD AND DEVICE FOR INSPECTING THE SURFACE OF A MOVING BAND

PROCÉDÉ ET DISPOSITIF D'INSPECTION DE LA SURFACE D'UNE BANDE EN MOUVEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2019 DE 102019107174**

(43) Veröffentlichungstag der Anmeldung:
**23.09.2020 Patentblatt 2020/39**

(73) Patentinhaber: **ThyssenKrupp Rasselstein GmbH 56626 Andernach (DE)**

(72) Erfinder: **Kett, Jürgen 56626 Andernach (DE)**

(74) Vertreter: **Charrier Rapp & Liebau Patentanwälte PartG mbB Fuggerstraße 20 86150 Augsburg (DE)**

(56) Entgegenhaltungen:
| WO-A1-94/18643 | DE-A1- 19 720 308 |
| DE-A1- 19 946 520 | DE-U1-202007 004 939 |
| DE-U1-202007 015 052 | US-A- 4 629 319 |
| US-A- 5 087 822 | US-B1- 6 327 374 |

**Beschreibung**

Die Erfindung betrifft ein Verfahren und eine Vorrichtung zur Inspektion der Oberfläche eines sich in einer Bandlaufrichtung bewegenden Bands durch einen Inspekteur.

In der Herstellung von beschichteten oder unbeschichteten Stahlbändern, beispielsweise für den Automobilbau und für Verpackungsanwendungen, wird die Oberfläche des Bands, bei der es sich um eine unbeschichtete oder eine beschichtete Oberfläche eines Stahlbands handeln kann, mittels Oberflächeninspektionssystemen untersucht, um Oberflächenfehler zum Zwecke der Qualitätskontrolle zu detektieren. Hierbei wird die Oberfläche eines aus einem Produktions- oder Veredelungsprozess kommenden und sich mit einer Bandgeschwindigkeit bewegenden Bands mit Lichtquellen beleuchtet und mit Kameras überwacht, um ein Bild der Oberfläche des Bands aufzunehmen. Eine solche Oberflächenkontrolle von (beschichteten oder unbeschichteten) Stahlbändern erfolgt regelmäßig unmittelbar nach Beendigung eines Produktions-, Veredelungs- oder Beschichtungsverfahrens, bevor das Band zu einer Rolle (coil) aufgewickelt wird.

Aus dem Stand der Technik sind zahlreiche automatische Oberflächeninspektionssysteme auf Kamerabasis bekannt, mit denen automatisiert eine Detektion sowie eine Dokumentation und Klassifizierung von Oberflächendefekten erfolgen kann.

In den bekannten Oberflächeninspektionssystemen wird die Oberfläche eines zu untersuchenden Bands mit Lichtquellen beleuchtet und die beleuchtete Oberfläche wird durch eine oder mehrere Kameras im Hellfeld und/oder im Dunkelfeld aufgenommen. Zur Beobachtung der Bandoberfläche im Dunkelfeld sind die Kameras dabei in Bezug auf die beleuchtete Oberfläche des Bands so angeordnet, dass die von den Lichtquellen auf die Bandoberfläche gerichtete und von dort reflektierte Strahlung außerhalb des Beobachtungsfelds der Kamera abgelenkt wird, wobei die an Oberflächendefekten reflektierte oder gestreute Strahlung in Richtung der Kamera in deren Beobachtungsfeld abgelenkt wird. Dadurch werden Oberflächenfehler in dem ansonsten dunklen Kamerabild als helle Flecken erkennbar gemacht (Beobachtung im Dunkelfeld). Bei einer Beobachtung der Bandoberfläche im Hellfeld wird die von den Lichtquellen auf die Bandoberfläche gerichtete und von dort reflektierte Strahlung zur Kamera hin gerichtet. Eine fehlerfreie Oberfläche erzeugt dabei in der Kamera ein helles Bild. Taucht ein Fehler auf der Oberfläche auf, so wird ein Teil der Strahlung abgelenkt und diffus gestreut und erscheint somit nicht in dem Kamerabild. Ein Oberflächenfehler äußert sich hier als dunkler Fleck in dem ansonsten hellen Kamerabild (Beobachtung im Hellfeld).

Aus dem Stand der Technik, beispielsweise der DE 197 20 308 A, sind Vorrichtungen bekannt, in denen eine Beobachtung der zu inspizierenden Oberfläche sowohl in einer Hellfeld- als auch in einer Dunkelfeldbeobachtung erfolgt. Hierfür sind für die Beobachtung des Hellfelds und des Dunkelfelds separate Kameras vorgesehen, die in Bezug auf die von der Oberfläche reflektierten Strahlung im Ausfallwinkel bzw. außerhalb des Ausfallwinkels der Lichtstrahlen angeordnet. Die von den im Hellfeld und im Dunkelfeld angeordneten Kameras aufgenommenen Bilder können zur Erzeugung eines Inspektionsbilds zusammengesetzt werden. Dadurch wird es möglich, nahezu alle Arten von möglichen Oberflächendefekten zu erfasser

Aus dem US-Patent 5,087,822 A ist eine Vorrichtung zur Inspektion eines sich bewegenden Stahlbandes bekannt, bei dem Beleuchtungsvorrichtungen die zu inspizierende Oberfläche unter verschiedenen Winkeln beleuchten, wobei das von der zu inspizierende Oberfläche reflektierte Licht über eine Spiegelvorrichtung zu einer Kamera geführt wird.

Aus dem US-Patent 6,327,374 B1 ist eine Vorrichtung zur Inspektion eines fortlaufend bewegten bandartigen Objektes bekannt, bei dem die zu inspizierende Oberfläche anhand von mehreren Beleuchtungsvorrichtungen unter verschiedenen Winkeln beleuchtet wird und jeweils für jede Beleuchtungsvorrichtung separat eine Bildaufnahme erfolgt und die Bildaufnahmen miteinander verrechnet werden um die zu untersuchende Oberfläche zu untersuchen.

Aus dem US-Patent 4,629,319 ist eine Vorrichtung zur automatischen oder manuellen Inspektion von Stahlbändern unter Hellfeldbeleuchtung bekannt.

Trotz der automatischen Fehlerdetektion von Oberflächenfehlern mit den bekannten Oberflächeninspektionssystemen auf Kamerabasis ist es jedoch in der Regel erforderlich, dass ein Inspekteur die vom Oberflächeninspektionssystem erfassten Fehler kontrolliert, um zu beurteilen, ob der detektierte Fehler tatsächlich vorhanden ist oder toleriert werden kann oder ob es erforderlich ist, den fehlerbehafteten Bereich des Bands herauszuschneiden, um den Fehler zu eliminieren. Dies liegt insbesondere daran, dass auch mit automatisierten Oberflächeninspektionssystemen, die die Oberfläche eines Bands sowohl im Hellfeld als auch im Dunkelfeld beobachten, nicht alle Defekte zuverlässig detektierbar sind. Aus diesem Grund erfolgt häufig eine Nachbetrachtung durch einen Inspekteur. Hierfür sind aus dem Stand der Technik Beleuchtungseinrichtungen bekannt, mit denen die Oberfläche eines von einem Inspekteur zu untersuchenden Bands möglichst gleichmäßig ausgeleuchtet wird, sodass ein Inspekteur insbesondere bei laufendem Band die Bandoberfläche mit dem menschlichen Auge inspizieren und auf Defekte untersuchen kann.

Die aus dem Stand der Technik bekannten Beleuchtungssysteme, die für eine (ergänzende) Inspektion eines Bands durch einen Inspekteur eingesetzt werden, weisen jedoch häufig eine zu ungleichmäßige Ausleuchtung der Bandoberfläche auf, weshalb der Inspekteur in den unzureichend ausgeleuchteten Bereichen der Bandoberfläche vorhandene Defekte nicht erkennen kann. Weiterhin führen die aus dem Stand der Technik bekannten Beleuchtungssysteme oftmals zu einer Blendung des Inspekteurs. Eine Blendung des Inspekteurs hat zur Folge, dass Oberflächendefekte, insbesondere in übermäßig stark belichteten Bereichen der Bandoberfläche, vom Inspekteur übersehen werden können. Des Weiteren führt eine Blendung des Inspekteurs zu einer raschen Ermüdung. Weitere Nachteile bei bekannten Beleuchtungssystemen für die Inspektion von Bandoberflächen durch einen Inspekteur liegen darin, dass die bekannten Beleuchtungssysteme nur an einer Seite des zu inspizierenden Bands angeordnet sind und der Inspekteur daher nur eine Bandseite beobachten kann.

Hiervon ausgehend liegt der Erfindung die Aufgabe zugrunde, ein Verfahren und eine Vorrichtung zur Inspektion der Oberfläche eines sich bewegenden Bands durch einen Inspekteur aufzuzeigen, mit denen eine blendfreie Beobachtung möglichst beider Seiten des Bands ermöglichst wird, wobei die Bandoberfläche möglichst gleichmäßig und über die gesamte Bandbreite ausgeleuchtet werden soll, so dass der Inspekteur alle Defekte an der Oberfläche des Bands erkennen kann.

Gelöst wird diese Aufgabe mit einem Verfahren mit den Merkmalen des Anspruchs 1 und mit einer Vorrichtung mit den Merkmalen des Anspruchs 8. Bevorzugte Ausführungsformen des Verfahrens und der Vorrichtung sind den abhängigen Ansprüchen zu entnehmen.

In dem erfindungsgemäßen Verfahren zur Inspektion der Oberfläche eines sich in einer Bandlaufrichtung bewegenden Bands durch einen Inspekteur wird die Oberfläche des Bands mit wenigstens einer ersten und einer zweiten Lichtquelle bestrahlt, wobei die erste Lichtquelle einen Lichtstrahl unter einem ersten Einstrahlwinkelbereich auf einen ersten Oberflächenbereich und die zweite Lichtquelle Licht unter einem zweiten Einstrahlwinkelbereich auf einen zweiten Oberflächenbereich der Bandoberfläche einstrahlt, wobei die erste und die zweite Lichtquelle abwechselnd gepulst mit einer vorgegebenen Pulsfrequenz betrieben werden, so dass die Oberfläche des Bands abwechselnd mit der Pulsfrequenz in dem ersten Oberflächenbereich und dem zweiten Oberflächenbereich bestrahlt wird. Der von der ersten Lichtquelle bestrahlte erste Oberflächenbereich wird dabei von dem Inspekteur über einen Spiegel im Hellfeld beobachtet und der von der zweiten Lichtquelle bestrahlte zweite Oberflächenbereich wird von dem Inspekteur über den Spiegel im Dunkelfeld beobachtet.

In der erfindungsgemäßen Vorrichtung ist eine erste und mindestens eine zweite Lichtquelle vorgesehen, wobei die erste Lichtquelle dazu eingerichtet ist, die Oberfläche des Bands unter einem ersten

Einstrahlwinkelbereich in einem ersten Oberflächenbereich bestrahlt und die zweite Lichtquelle dazu eingerichtet ist, die Oberfläche des Bands unter einem zweiten Einstrahlwinkelbereich in einem zweiten Oberflächenbereich zu bestrahlen die erste und die zweite Lichtquelle dazu eingerichtet sind, abwechselnd gepulst mit einer vorgegebenen Pulsfrequenz betrieben zu werden, so dass die Oberfläche des Bands abwechselnd mit der Pulsfrequenz in dem ersten und dem zweiten Oberflächenbereich bestrahlt wird. Zur Beobachtung des ersten und des zweiten Oberflächenbereichs durch einen Inspekteur ist in der erfindungsgemäßen Vorrichtung zumindest ein Spiegel vorgesehen, der in einem vorgegebenen Abstand zur Oberfläche des Bands angeordnet ist und über den der Inspekteur den von der ersten Lichtquelle bestrahlten ersten Oberflächenbereich im Hellfeld und den von der zweiten Lichtquelle bestrahlten zweiten Oberflächenbereich im Dunkelfeld beobachten kann.

Mit der erfindungsgemäßen Vorrichtung und in dem erfindungsgemäßen Verfahren ist es für den Inspekteur möglich, sowohl das Hellfeld als auch das Dunkelfeld der von den beiden Lichtquellen bestrahlten Bandoberfläche zu beobachten. Hierfür wird die erste und die zweite Lichtquelle im Stroboskopbetrieb mit der vorgegebenen Pulsfrequenz betrieben, so dass die Bandoberfläche abwechselnd mit der Pulsfrequenz aus Sicht des Inspekteurs im Hellfeld und im Dunkelfeld bestrahlt wird. Der von der ersten Lichtquelle bestrahlte erste Oberflächenbereich der Bandoberfläche stellt dabei aus Sicht des Inspekteurs das Hellfeld und der von der zweiten Lichtquelle bestrahlte zweite Oberflächenbereich stellt das Dunkelfeld dar, d.h., die von der ersten Lichtquelle an der Bandoberfläche reflektierte Strahlung ist zum Inspekteur gerichtet und die von der zweiten Lichtquelle an der Bandoberfläche reflektierte Strahlung ist vom Inspekteur weggerichtet. Das von der ersten und der zweiten Lichtquelle auf die Bandoberfläche eingestrahlte Licht wird dabei bevorzugt schräg auf die Bandoberfläche gerichtet und weist zweckmäßig eine Strahlungsrichtung mit einer Komponente quer (senkrecht) zur Bandlaufrichtung auf. Dabei liegt der erste Einstrahlwinkelbereich ($\Delta\alpha_1$) bevorzugt zwischen 10° und 50° liegt und der zweite Einstrahlwinkelbereich ($\Delta\alpha_2$) liegt bevorzugt zwischen 60° und 90°.

Der Inspekteur beobachtet dabei sowohl das Hellfeld als auch das Dunkelfeld der Bandoberfläche über einen Spiegel, wobei die Blickrichtung des Inspekteurs bevorzugt quer zur Bandlaufrichtung gerichtet ist. Dies ermöglicht eine blendfreie Beobachtung und erlaubt es dem Inspekteur, die Bandoberfläche in einem ausreichenden Sicherheitsabstand vom laufenden Band vorzunehmen. Dies ist aus Sicherheitsgründen und aus Lärmschutzgründen vorteilhaft. Weiterhin ermöglicht die Beobachtung des Hellfelds und des Dunkelfelds durch den Inspekteur über einen Spiegel eine gleichzeitige Beobachtung beider Bandseiten. Hierfür ist in einer bevorzugten Ausführung der erfindungsgemäßen Vorrichtung und in einem bevorzugten Ausführungsbeispiel des erfindungsgemäßen Verfahrens vorgesehen, dass sowohl an der Bandunterseite als auch an der Bandoberseite eine gleichartige Vorrichtung gemäß der Erfindung angeordnet ist.

In einem weiteren bevorzugten Ausführungsbeispiel des erfindungsgemäßen Verfahrens und der erfindungsgemäßen Vorrichtung ist vorgesehen, dass der erste Oberflächenbereich (Hellfeld) zumindest teilweise mit dem zweiten Oberflächenbereich (Dunkelfeld) überlappt. Dem Inspekteur wird es dadurch ermöglicht, zumindest in dem Überlappungsbereich sowohl diejenigen Oberflächendefekte zu detektieren, die nur im Hellfeld sichtbar sind, als auch diejenigen Oberflächeneffekte, die nur im Dunkelfeld sichtbar sind. Dadurch wird eine zuverlässige Detektion aller Arten von Oberflächendefekten durch den Inspekteur ermöglicht.

In einem besonders bevorzugten Ausführungsbeispiel der Erfindung ist eine dritte und ggf. eine vierte Lichtquelle vorgesehen, die Licht unter einem dritten bzw. einem vierten Einstrahlwinkelbereich auf die Oberfläche des Bands einstrahlt. Der von der dritten und ggf. der vierten Lichtquelle bestrahlte dritte bzw. vierte Oberflächenbereich der Bandoberfläche wird dabei vom Inspekteur über den Spiegel im Dunkelfeld beobachtet. Der von der dritten und ggf. vierten Lichtquelle auf die Bandoberfläche gerichtete Lichtstrahl ist dabei schräg auf die Bandoberfläche gerichtet und weist eine Komponente der Strahlungsrichtung in oder entgegen der Bandlaufrichtung auf. Der von der dritten und ggf. vierten Lichtquelle beleuchtete Bereich der Bandoberfläche wird vom Inspekteur über den Spiegel im Dunkelfeld beobachtet, wobei die Blickrichtung des Inspekteurs quer zur Bandlaufrichtung gerichtet ist. Der Inspekteur sieht den von der dritten und ggf. vierten Lichtquelle bestrahlten Oberflächenbereich des Bands daher im "Mitlicht". Dadurch wird es für den Inspekteur ermöglicht, sowohl Hellfeld- und Dunkelfeld-Fehler als auch Mitlicht-Fehler auf der Bandoberfläche zu erkennen. Bevorzugt überlappt der dritte bzw. vierte Oberflächenbereich, der im Mitlicht (d.h., in Richtung der Bandlaufrichtung) von der dritten bzw. der vierten Lichtquelle auf die Bandoberfläche bestrahlt wird, zumindest teilweise mit dem ersten Oberflächenbereich (Hellfeld) und/oder dem zweiten Oberflächenbereich (Dunkelfeld), der von der ersten bzw. der zweiten Lichtquelle bestrahlt wird.

Dabei wird die dritte Lichtquelle, ebenso wie die erste und die zweite Lichtquelle, im Stroboskopbetrieb, d.h., gepulst mit einer vorgegebenen Pulsfrequenz betrieben. Besonders bevorzugt ist es dabei, die erste, zweite und dritte Lichtquelle nacheinander im Stroboskopbetrieb mit der vorgegebenen Pulsfrequenz zu betreiben, so dass der erste, der zweite und der dritte Oberflächenbereich des Bands abwechselnd mit Licht bestrahlt wird. Bei Verwendung einer vierten Lichtquelle, die wie die dritte Lichtquelle im "Mitlicht" (also mit einer Komponente der Strahlungsrichtung in oder entgegen der Bandlaufrichtung) angeordnet ist, wird diese bevorzugt im Takt der dritten Lichtquelle betrieben.

Die Pulsfrequenzen, mit denen die Lichtquellen betrieben werden, liegen dabei zweckmäßig im Bereich von 70 Hz bis 400 Hz. Dieser Bereich der Pulsfrequenz ermöglicht ein ermüdungsfreies Arbeiten des Inspekteurs. Insbesondere bei Frequenzen unterhalb von 70 Hz ist eine Beobachtung der Bandoberfläche durch einen Inspekteur sehr ermüdend. Die bevorzugte Obergrenze von 400 Hz für die Pulsfrequenz ist in erster Linie apparativ bedingt, da bei höheren Frequenzen eine Signalverarbeitung mit herkömmlichen Geräten erschwert wird. Die Pulslänge der von den Lichtquellen im Stroboskopbetrieb emittierten Lichtpulse liegt dabei bevorzugt im Bereich von 30μs bis 100μs.

Der Spiegel, über den der Inspekteur die von den Lichtquellen beleuchteten Oberflächenbereiche des Bands beobachtet, ist zweckmäßig oberhalb und/oder unterhalb des Bands mit einem vorgegebenen Abstand zur Bandoberfläche angeordnet, wobei eine Reflexionsfläche des Spiegels (insbesondere die Spiegeloberfläche) mit der Oberfläche des Bands bevorzugt einen Winkel im Bereich von 30° C bis 60° C und insbesondere einen Winkel von 45° C einschließt. Durch diese Anordnung des oder der Spiegel oberhalb bzw. unterhalb des Bands wird eine bequeme Beobachtung der Bandoberfläche durch den Inspekteur gewährleistet. Der Inspekteur kann dabei die Beobachtung im Stehen oder im Sitzen vornehmen, wobei das Band zweckmäßig entweder in einer horizontalen Ebene oder in einer vertikalen Ebene verläuft.

Jede der Lichtquellen, also die erste und die zweite Lichtquelle sowie die optional vorhandene dritte Lichtquelle oder jede weitere Lichtquelle, umfasst zweckmäßig eine Mehrzahl von LED-Lichtleisten mit mehreren, im Abstand zueinander angeordneten lichtemittierenden Dioden (LEDs). Dabei kann jede der Lichtquellen mehrere LED-Lichtleisten umfassen, die in geringem Abstand zueinander neben- bzw. hintereinander angeordnet sind. Durch diese bevorzugte Anordnung mehrerer LED-Lichtleisten wird jeweils eine flächige Lichtquelle erzeugt. Die auf diese Weise aus einer Mehrzahl von LED-Lichtleisten zusammengesetzten Lichtquellen verlaufen dabei bevorzugt parallel zur Bandoberfläche, d.h., die erste, die zweite und die optional vorhandene dritte Lichtquelle sowie jede weitere Lichtquelle sind in Bezug auf die Bandoberfläche so angeordnet, dass die LED-Lichtleisten in einer parallel zur Bandoberfläche verlaufenden Ebene liegen.

Durch diese Ausbildung und Anordnung der Lichtquellen wird eine homogene Ausleuchtung der Bandoberfläche ermöglicht. Weiterhin kann die für eine optionale Ausleuchtung der Bandoberfläche erforderliche Beleuchtungsstärke (Lichtintensität) bevorzugt durch eine Dimmbarkeit der einzelnen LED-Lichtleisten der verschiedenen Lichtquellen angepasst werden. Durch Zu- oder Abschalten einzelner LED-Lichtleisten der verschiedenen Lichtquellen kann ferner eine Anpassung des ausgeleuchteten Bereichs an die Breite des Bands erfolgen. Durch die Dimmbarkeit und das Zu- oder Abschalten einzelner LED-Lichtleisten kann wiederum eine unnötige Blendwirkung durch eine zu hohe Beleuchtungsstärke bzw. Lichtleistung der verwendeten Lichtquellen vermieden werden.

Eine Blendung des Inspekteurs durch die Lichtquellen kann weiterhin in einem bevorzugten Ausführungsbeispiel der Erfindung dadurch vermieden werden, dass jede LED-Lichtleiste jeder Lichtquelle mit einem Shutter (Blende) ausgestattet ist, mit dem ein Sichtfeld des Inspekteurs zu den LEDs der LED-Lichtleiste abgedeckt wird. Die Länge der Shutter ist dabei zweckmäßig an das von der Beobachtungsposition des Inspekteurs abhängige Sichtfeld anpassbar. Dies ermöglicht eine blendungsfreie Beobachtung der Bandoberfläche durch den Inspekteur in verschiedenen Beobachtungspositionen.

Diese und weitere Vorteile und Merkmale der Erfindung ergeben sich aus dem nachfolgend unter Bezugnahme auf die begleitenden Zeichnungen näher beschriebenen Ausführungsbeispiel. Das Ausführungsbeispiel dient dabei lediglich der Erläuterung der Erfindung und ist nicht als beschränkend für den in den Ansprüchen definierten Schutzbereich der Erfindung anzusehen. Die Zeichnungen zeigen:

Fig. 1: Schematische Darstellung einer Vorrichtung zur Inspektion der Oberfläche eines sich in einer Bandlaufrichtung bewegenden Bands in einer Ansicht in Bandlaufrichtung;

Fig. 2: Darstellung des von einer ersten Lichtquelle der Vorrichtung von Figur 1 erzeugten Hellfelds auf der Oberseite und der Unterseite des Bands;

Fig.3: Darstellung des von einer zweiten Lichtquelle und einer weiteren Lichtquelle der Vorrichtung von Figur 1 erzeugten Dunkelfelds auf der Oberseite und der Unterseite des Bands;

Fig. 4: Schematische Darstellung der Vorrichtung von Figur 1 in einer Ansicht senkrecht zur Bandlaufrichtung;

Fig. 5: Detaildarstellung der zweiten Lichtquelle der Vorrichtung von Figur 1;

Fig. 6: Detaildarstellung der ersten Lichtquelle der Vorrichtung von Figur 1;

Fig. 7: Schematische Darstellung einer in der Vorrichtung von Figur 1 zur Ausbildung der Lichtquellen verwendeten LED-Lichtleiste.

Die erfindungsgemäße Vorrichtung und das erfindungsgemäße Verfahren können zur Inspektion der Oberfläche eines sich in einer Bandlaufrichtung mit einer vorgegebenen Bandgeschwindigkeit bewegenden Bands durch einen Inspekteur eingesetzt werden. Bei dem Band kann es sich beispielsweise um ein unbeschichtetes Stahlband (Schwarzblechband) oder um ein beschichtetes Stahlband, wie z.B. ein verzinktes oder verzinntes Stahlband (Weißblechband) handeln. Das Band kann auch an seiner Oberfläche eine organische Beschichtung, beispielsweise eine Lackschicht oder eine Polymerbeschichtung, aufweisen. Die erfindungsgemäße Vorrichtung ermöglicht es dem Inspekteur in dem erfindungsgemäßen Verfahren Oberflächendefekte an den Oberflächen des Bands zu erkennen. Wenn der Inspekteur einen Defekt erkennt, kann das laufende Band angehalten und der schadhafte Bereich, in dem der erkannte Oberflächendefekt liegt, aus dem Band herausgeschnitten werden. Die erfindungsgemäße Vorrichtung ist dabei zweckmäßig am Ende einer Anlage zur Herstellung oder Veredelung des Bands und vor einer Aufwickelvorrichtung zum Aufwickeln des Bands zu einer Rolle (coil) angeordnet.

Die erfindungsgemäße Vorrichtung und das erfindungsgemäße Verfahren können dabei auch in Kombination mit einem vollautomatischen Oberflächeninspektionsgerät eingesetzt werden, wobei die erfindungsgemäße Vorrichtung zweckmäßig in Bandlaufrichtung nach dem vollautomatischen Oberflächeninspektionsgerät angeordnet ist. Die erfindungsgemäße Vorrichtung und das erfindungsgemäße Verfahren dienen dabei einer ergänzenden Inspektion der Bandoberflächen, zusätzlich zu der vollautomatischen Inspektion durch das Oberflächeninspektionsgerät. Bestimmte Oberflächendefekte können mit den bekannten, automatischen Oberflächeninspektionsgeräten, in denen Kameras zur bildlichen Abtastung der Bandoberfläche eingesetzt werden, nicht vollständig oder nicht genau genug erkannt werden. Die erfindungsgemäße Vorrichtung und das erfindungsgemäße Verfahren ermöglichen es einem Inspekteur insbesondere, die von einem vollautomatischen Oberflächeninspektionsgerät erkannten Defekte einer weiteren und insbesondere einer genaueren Prüfung zu unterziehen, um zu entscheiden, ob der erkannte Oberflächendefekt ein Herausschneiden des mit dem Defekt behafteten Bandbereichs notwendig erscheinen lässt.

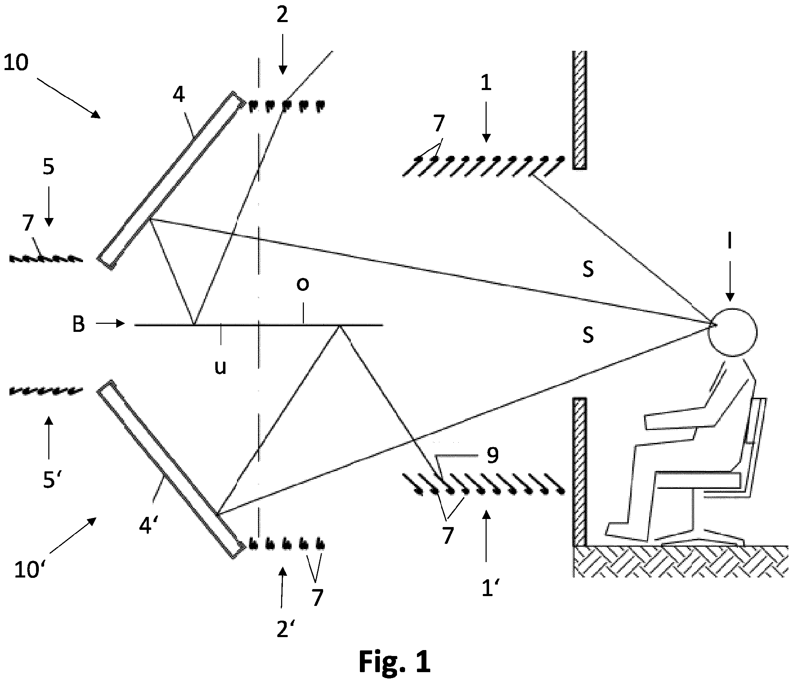

Die in den Figuren 1 bis 4 gezeigte Vorrichtung zur Inspektion der Oberfläche eines sich in einer Bandlaufrichtung v mit einer vorgegebenen Bandgeschwindigkeit bewegenden Bands B umfasst jeweils eine an der Bandoberseite o und eine an der Bandunterseite u angeordnete Vorrichtung 10, 10'. Typische Bandgeschwindigkeiten liegen dabei im Bereich von 100 bis 700 m/min. Die Bandgeschwindigkeit ist dabei abhängig von der Geschwindigkeit, mit der das Band aus einem Herstellungs- oder Veredelungsprozess, wie z.B. einer Bandbeschichtungsanlage, heraus bewegt wird.

Die in Figur 1 in einer Ansicht in Bandlaufrichtung v gezeigten Vorrichtungen 10, 10', die an der Bandoberseite o bzw. der Bandunterseite u des Bands B angeordnet sind, umfassen jeweils eine erste Lichtquelle 1, 1', eine zweite Lichtquelle 2, 2' und eine weitere Lichtquelle 5, 5' sowie einen Spiegel 4,4'. Die erste Lichtquelle 1,1' jeder Vorrichtung 10, 10' ist dabei seitlich versetzt neben sowie oberhalb bzw. unterhalb des Bands B angeordnet. Die zweite Lichtquelle 2,2' ist über dem Band bzw. unter dem Band B im Abstand zur jeweiligen Bandoberfläche an der Bandoberseite o bzw. der Bandunterseite u angeordnet. Die weitere Lichtquelle 5, 5' ist wiederum seitlich versetzt und oberhalb bzw. unterhalb des Bands B angeordnet. Der Spiegel 4 der oberhalb des Bands B angeordneten Vorrichtung 10 weist eine Spiegeloberfläche auf, die unter einem vorgegebenen Winkel zur Oberfläche des Bands B angeordnet ist. Die Spiegeloberfläche des Spiegels 4 schließt mit der Ebene des Bands B (also mit der Bandoberfläche) einen Winkel im Bereich von bevorzugt 30 bis 60° und insbesondere von 45° ein. Der unterhalb des Bands B angeordnete Spiegel 4' der an der Bandunterseite u angeordneten Vorrichtung 10' ist in entsprechender Weise zur Oberfläche des Bands orientiert, so dass die Spiegeloberfläche des Spiegels 4' einen Winkel im Bereich von 40° bis 60° und insbesondere von 45° mit der Bandoberfläche einschließt.

Die Lichtquellen 1, 1', 2, 2' und 5, 5' strahlen jeweils Licht unter einem vorgegebenen Einstrahlwinkelbereich auf eine Oberfläche des Bands B, wobei die Lichtquellen 1, 2 und 5 der oberhalb des Bands B angeordneten Vorrichtung Licht auf die Bandoberseite o einstrahlen und die Lichtquellen 1', 2' und 5' der unterhalb des Bands B angeordneten Vorrichtung 10' Licht auf die Bandunterseite u einstrahlen. Das von den Lichtquellen 1, 1', 2, 2' und 5,5' beleuchtete Band B wird von dem Inspekteur I über die Spiegel 4, 4' beobachtet, wobei der Spiegel 4 der oberen Vorrichtung 10 die Beobachtung der Bandoberseite o und der Spiegel 4' der unteren Vorrichtung 10' die Beobachtung der Bandunterseite u ermöglicht.

Das von der ersten Lichtquelle der oberen bzw. der unteren Vorrichtung 10, 10' auf die Bandoberflächen eingestrahlte Licht wird vom Inspekteur I im Hellfeld beobachtet. Das von der ersten Lichtquelle 1,1' emittierte und an der jeweiligen Bandoberfläche reflektierte Licht wird über den Spiegel 4, 4' in das Sichtfeld S des Inspekteurs I gelenkt, weshalb der Inspekteur I den von der ersten Lichtquelle 1, 1' bestrahlten Bereich der Bandoberfläche im Hellfeld wahrnimmt.

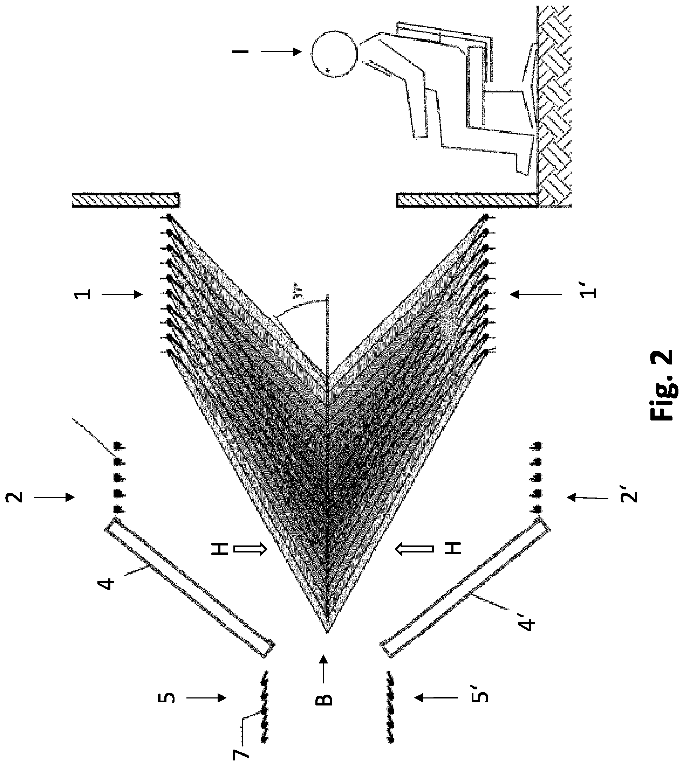

In Figur 2 ist die Beleuchtung der Bandoberflächen durch die erste Lichtquelle 1, 1' im Hellfeld H gezeigt. Wie aus Figur 2 ersichtlich, strahlt die erste Lichtquelle 1,1' einen Lichtstrahl mit einem durch die verwendete Lichtquelle vorgegebenen Lichtkegel unter einem vorgegebenen ersten Einstrahlwinkel $\alpha1$ auf die Bandoberflächen ein. Der Einstrahlwinkel $\alpha1$ beträgt in dem zeichnerisch dargestellten Beispiel $\alpha1 = 37°$. Durch den Einstrahlwinkel $\alpha1$ und dem Abstrahlwinkelbereich $\Delta$ des Lichtkegels der ersten Lichtquelle wird ein erster Einstrahlwinkelbereich $\Delta\alpha1 = \alpha1 \pm \Delta$ definiert. Der Abstrahlwinkelbereich $\Delta$ der verwendeten Lichtquelle liegt dabei zweckmäßig zwischen 10° und 20° und insbesondere bei $\Delta = 15°$.

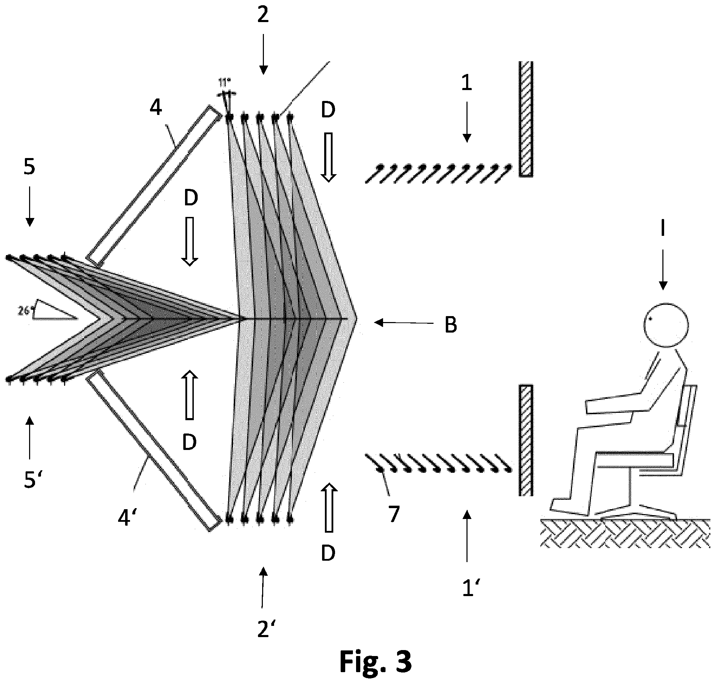

In Figur 3 ist das von der zweiten Lichtquelle 2, 2' und der weiteren Lichtquelle 5, 5' erzeugte Dunkelfeld auf den Bandoberflächen gezeigt. Der von der zweiten Lichtquelle 2, 2' und der weiteren Lichtquelle 5, 5' auf die Bandoberflächen gerichtete Lichtstrahl wird von der Bandoberfläche und dem jeweiligen Spiegel 4, 4' aus dem Sichtfeld S des Inspekteurs I wegreflektiert, weshalb der Inspekteur I die von der zweiten Lichtquelle 2, 2' und der weiteren Lichtquelle 5, 5' bestrahlten Oberflächenbereiche des Bands B im Dunkelfeld D sieht. Die Beleuchtung der Bandoberflächen mit der zweiten Lichtquelle 2, 2' und der weiteren Lichtquelle 5, 5' ermöglichen daher dem Inspekteur I die Oberflächen des Bands B an der Bandoberseite o und der Bandunterseite u im Dunkelfeld zu beobachten.

Wie aus Figur 3 ersichtlich, strahlt die zweite Lichtquelle 2, 2' einen Lichtstrahl mit einem durch die verwendete Lichtquelle vorgegebenen Lichtkegel unter einem vorgegebenen zweiten Einstrahlwinkel $\alpha2$ auf die Bandoberflächen ein. Der Einstrahlwinkel $\alpha2$ beträgt in dem zeichnerisch dargestellten Beispiel $\alpha2 = 90° - 11° = 79°$. Durch den Einstrahlwinkel $\alpha2$ und dem Abstrahlwinkelbereich $\Delta$ des Lichtkegels der zweiten Lichtquelle 2, 2' wird ein zweiter Einstrahlwinkelbereich $\Delta\alpha2 = \alpha2 \pm \Delta$ definiert. In entsprechender Weise strahlt die weitere Lichtquelle 5, 5' einen Lichtstrahl mit einem durch die verwendete Lichtquelle vorgegebenen Lichtkegel unter einem vorgegebenen Einstrahlwinkel $\alpha5$ auf die Bandoberflächen ein. Der Einstrahlwinkel $\alpha5$ beträgt in dem zeichnerisch dargestellten Beispiel $\alpha5 = 26°$. Durch den Einstrahlwinkel $\alpha5$ und dem Abstrahlwinkelbereich $\Delta$ wird ein Einstrahlwinkelbereich $\Delta\alpha5 = \alpha5 \pm \Delta$ definiert. Wie bei der ersten Lichtquelle liegt der Abstrahlwinkelbereich $\Delta$ der Lichtquellen 2, 2' und 5,5' dabei zweckmäßig zwischen 10° und 20° und insbesondere bei $\Delta = 15°$.

Die Einstrahlwinkel $\alpha1$, $\alpha2$ und $\alpha5$ der ersten Lichtquelle 1, 1', der zweiten Lichtquelle 2, 2' und der weiteren Lichtquelle 5,5' liegen bevorzugt in folgenden Bereichen:

- 
$$30° \leq \alpha1 \leq 45°$$

- 
$$60° \leq \alpha2 < 90°$$

- 
$$10° \leq \alpha5 \leq 40°$$

Die erste Lichtquelle 1, 1', die zweite Lichtquelle 2,2' und die weitere Lichtquelle 5,5' werden dabei abwechselnd im Stroboskopbetrieb mit einer vorgegebenen Pulsfrequenz f betrieben, so dass die Oberfläche des Bands B abwechselnd mit der Pulsfrequenz f von der ersten Lichtquelle 1, 1' im Hellfeld (H) sowie von der zweiten Lichtquelle 2,2' und der weiteren Lichtquelle 5, 5' im Dunkelfeld (D) bestrahlt wird. Der Inspekteur I kann dadurch mit der Pulsfrequenz f der Lichtquellen sowohl das Hellfeld H als auch das Dunkelfeld D der Bandoberflächen (nacheinander) beobachten. Die Pulsfrequenz f liegt dabei zweckmäßig im Bereich von 70 Hz bis 400 Hz und bevorzugt zwischen 100 Hz und 300 Hz. Die von den Lichtquellen 1, 1', 2, 2' und 5, 5' emittierten Lichtpulse weisen zweckmäßig eine vorgegebene Pulslänge t im Bereich von 30 $\mu$s bis 100 $\mu$s und bevorzugt zwischen 50 $\mu$s und 80 $\mu$s auf. Aufgrund der hohen Pulsfrequenz f und der geringen Pulslängen t kann der Inspekteur I an dem laufenden Band B quasi gleichzeitig sowohl eine Hellfeld- als auch eine Dunkelfeld-Beobachtung durchführen. Dies ermöglicht dem Inspekteur I unterschiedliche Oberflächendefekte, die entweder nur im Hellfeld oder nur im Dunkelfeld beobachtet werden können, zu detektieren.

Hierfür ist es zweckmäßig, wenn der von der ersten Lichtquelle 1, 1' bestrahlte Oberflächenbereich (Dunkelfeld D) und der von der zweiten Lichtquelle 2,2' sowie (optional) der von der weiteren Lichtquelle 5, 5' bestrahlte Oberflächenbereich (Dunkelfeld D) auf der jeweiligen Bandoberfläche zumindest teilweise überlappt.

Die in Figur 1 gezeigten Lichtquellen 1, 1', 2, 2' und 5, 5' strahlen jeweils Licht unter einem vorgegebenen Einstrahlwinkelbereich und einer vorgegebenen Strahlungsrichtung auf die Oberfläche des Bands B ein, wobei die Strahlungsrichtung der Lichtquellen dabei eine Komponente quer zur Bandlaufrichtung v (also senkrecht zur Bandlaufrichtung v) und eine senkrecht auf die Bandoberfläche gerichtete Komponente aufweist.

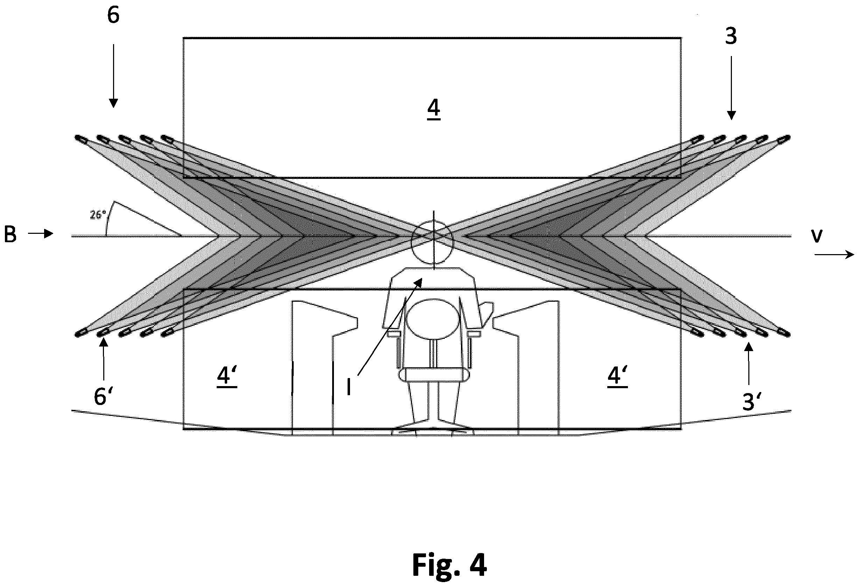

Ergänzend zu den aus Figur 1 ersichtlichen Lichtquellen 1, 1', 2, 2' und 5, 5' können in der erfindungsgemäßen Vorrichtung bevorzugt noch weitere Lichtquellen vorgesehen sein, um die Bandoberflächen möglichst gut und gleichmäßig auszuleuchten. So können insbesondere, wie aus Figur 4 ersichtlich, eine dritte Lichtquelle 3, 3' und eine vierte Lichtquelle 6, 6' oberhalb bzw. unterhalb des Bands B angeordnet sein, wobei die dritte Lichtquelle 3, 3' Licht unter einem vorgegebenen Einstrahlwinkelbereich und einer vorgegebenen Strahlungsrichtung entgegen der Bandlaufrichtung v auf die Bandoberflächen einstrahlt. Der Einstrahlwinkel $\alpha 3$ der dritten Lichtquelle 3, 3' und der optionalen vierten Lichtquelle 6, 6' beträgt in dem zeichnerisch dargestellten Beispiel $\alpha 3 = 26°$ und liegt bevorzugt im Bereich von 10° bis 40°. Bei einem Abstrahlwinkelbereich $\Delta$ des Lichtkegels der dritten Lichtquelle 3, 3' bzw. der vierten Lichtquelle 6, 6' wird ein dritter Einstrahlwinkelbereich $\Delta\alpha 3 = \alpha 3 \pm \Delta$ definiert.

Die dritte Lichtquelle 3, 3' strahlt Licht unter dem vorgegebenen Einstrahlwinkelbereich $\Delta\alpha 3$ in einer in Bandlaufrichtung v gerichteten Strahlungsrichtung auf die Bandoberflächen ein. Die vierte Lichtquelle 6, 6' strahlt dagegen Licht unter demselben Einstrahlwinkelbereich $\Delta\alpha 3$ und in einer entgegen der Bandlaufrichtung v gerichteten Strahlungsrichtung auf die Bandoberflächen ein. Die Strahlungsrichtungen der dritten Lichtquelle 3, 3' und der vierten Lichtquelle 6, 6' enthalten also eine in bzw. entgegen der Bandlaufrichtung v gerichtete Komponente (sowie eine senkrecht auf die Bandoberfläche gerichtete Komponente der Strahlungsrichtung). Die dritte Lichtquelle 3, 3' und die vierte Lichtquelle 6, 6' ermöglichen dem Inspekteur I die Oberflächen an der Bandoberseite o und der Bandunterseite u im Mitlicht (also mit einer Strahlungsrichtung mit einer Komponente in oder entgegen der Bandlaufrichtung v) zu beobachten. Dadurch können weitere Oberflächendefekte beobachtet werden, die im Hellfeld H oder im Dunkelfeld D nicht oder nur unzureichend beobachtet werden können.

Wie die erste, die zweite und die weitere Lichtquelle 1, 1'; 2, 2'; 5, 5' werden zweckmäßig auch die dritte Lichtquelle 3, 3' und die vierte Lichtquelle 6, 6' abwechselnd zu der ersten und der zweiten Lichtquelle im Stroboskopbetrieb mit einer vorgegebenen Pulsfrequenz und Pulslänge betrieben, so dass die von den Lichtquellen beleuchteten Bereiche abwechselnd in der Pulsfrequenz vom Inspekteur I beobachtet werden können. Dabei werden die dritte Lichtquelle 3, 3' und die vierte Lichtquelle 6, 6' taktgleich gepulst betrieben, d.h. die dritte Lichtquelle 3, 3' und die vierte Lichtquelle 6, 6' sind gleichzeitig im Takt an oder aus.

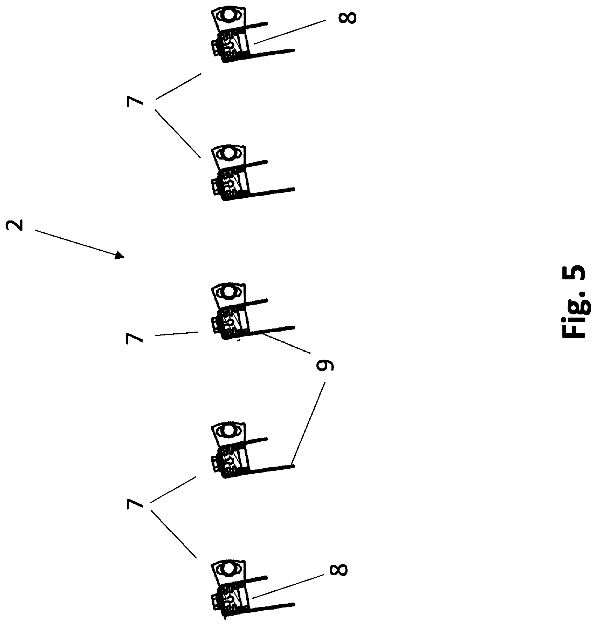

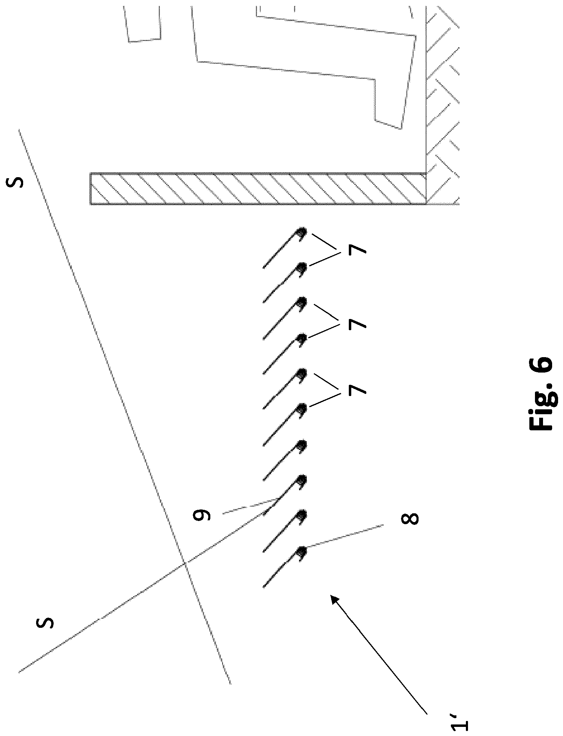

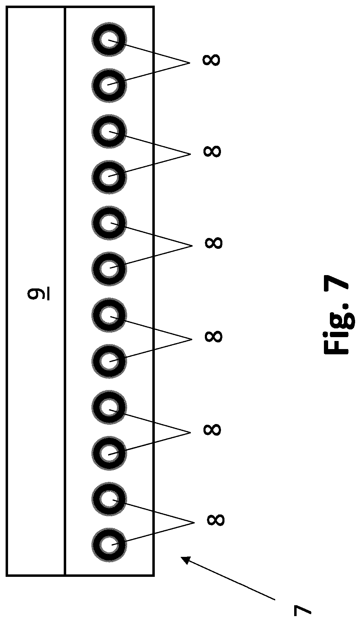

Die in der erfindungsgemäßen Vorrichtung verwendeten Lichtquellen sind bevorzugt durch mehrere im Abstand neben- bzw. hintereinander angeordnete LED-Lichtleisten 7 gebildet. In den Figuren 5 und 6 sind beispielhaft die oberhalb der Bandoberseite o angeordnete zweite Lichtquelle 2 und die unterhalb der Bandunterseite u angeordnete erste Lichtquelle 1' im Detail in einer Seitenansicht dargestellt. Die in Figur 5 gezeigte zweite Lichtquelle 2 umfasst in dem zeichnerisch dargestellten Ausführungsbeispiel fünf hintereinander angeordnete und parallel zueinander verlaufende LED-Lichtleisten 7. Jede dieser fünf LED-Lichtleisten 7 enthält dabei mehrere, im Abstand in Längsrichtung der LED-Lichtleiste 7 angeordnete lichtemittierende Dioden (LED) 8. In Figur 7 ist eine solche LED-Lichtleiste mit insgesamt zwölf LEDs 8 beispielhaft dargestellt.

Um eine Blendung des Inspekteurs I zu vermeiden, weist jede LED-Lichtleiste 7 bevorzugt einen Shutter 9 auf, der im Sichtfeld S des Inspekteurs angeordnet ist, so dass der Inspekteur I weder direkt noch indirekt über einen der Spiegel 4, 4' in den von den LEDs 8 emittierten Lichtkegel blicken kann. Dies ist in Figur 6 angedeutet, wo die Ränder des Sichtfelds S des Inspekteurs I gezeigt sind. Wie aus Figur 6 ersichtlich, decken die Shutter 9 der LED-Lichtleisten 7 das Sichtfeld S des Inspekteurs I ab und verhindern dadurch eine Blendung des Inspekteurs I. Dadurch wird dem Inspekteur I ein blend- und ermüdungsfreies Arbeiten ermöglicht.

Aus Figur 1 ist ersichtlich, dass durch die Ausbildung der Lichtquellen in Form von mehreren, hinter- bzw. nebeneinander angeordneten LED-Lichtleisten 7 jeweils flächig ausgebildete Lichtquellen bereitgestellt werden. Die LED-Lichtleisten 7 der Lichtquellen verlaufen dabei zweckmäßig parallel zur Bandoberfläche. Entsprechendes trifft auch auf die dritte Lichtquelle 3, 3' und die vierte Lichtquelle 6, 6' zu. Durch die flächige Ausbildung der Lichtquellen wird eine großflächige Ausleuchtung der Bandoberflächen im Sichtfeld S des Inspekteurs I ermöglicht.

Durch An- oder Abschalten einzelner LED-Lichtleisten 7 der einzelnen Lichtquellen können dabei Bereiche der Bandoberfläche hell oder dunkel geschaltet werden. Weiterhin ist es möglich, durch An- oder Abschalten einzelner LED-Lichtleisten 7 der Lichtquellen den bestrahlten Bereich der Bandoberflächen an die Breite des Bands B anzupassen.

Die Erfindung ist nicht auf das zeichnerisch dargestellte Ausführungsbeispiel beschränkt. So ist es beispielsweise nicht erforderlich, die in dem dargestellten Ausführungsbeispiel gewählte Anzahl und Anordnung der Lichtquellen beizubehalten. Im Sinne der Erfindung ist es ausreichend, die Oberfläche des Bands B lediglich mit einer ersten und einer zweiten Lichtquelle zu bestrahlen, wobei die erste Lichtquelle eine Oberfläche des Bands in einem Hellfeld und die andere Lichtquelle dieselbe Oberfläche des Bands in einem Dunkelfeld bestrahlt, wobei die beiden Lichtquellen abwechselnd gepulst mit einer vorgegebenen Pulsfrequenz betrieben werden, so dass die Oberfläche des Bands abwechselnd mit der Pulsfrequenz in dem ersten Oberflächenbereich im Hellfeld und in dem zweiten Oberflächenbereich im Dunkelfeld des beobachtenden Inspekteurs I bestrahlt wird.

Des Weiteren ist es im Sinne der Erfindung nicht erforderlich, sowohl an der Bandoberseite o als auch an der Bandunterseite u eine Vorrichtung gemäß der Erfindung anzuordnen. Wenn der Inspekteur I lediglich eine Oberfläche des Bands B, also beispielsweise die Bandoberseite o, beobachten möchte, reicht es aus, wenn lediglich an der Bandoberseite o eine Vorrichtung gemäß der Erfindung angeordnet wird. Allerdings ermöglicht die Erfindung aufgrund der Beobachtung der Bandoberfläche durch den Inspekteur I über (wenigstens) einen Spiegel 4, 4' eine gleichzeitige Beobachtung sowohl der Oberfläche an der Bandoberseite o als auch an der Bandunterseite u.

**Patentansprüche**

1. Verfahren zur Inspektion wenigstens einer Oberfläche eines sich in einer Bandlaufrichtung (v) bewegenden Bands (B) durch einen Inspekteur (I), wobei die Oberfläche des Bands (B) mit wenigstens einer ersten Lichtquelle (1, 1') und einer zweiten Lichtquelle (2, 2') bestrahlt wird und wobei die erste Lichtquelle (1, 1') Licht unter einem ersten Einstrahlwinkelbereich ($\Delta\alpha_1$) auf einen ersten Oberflächenbereich (H) und die zweite Lichtquelle (2,2') Licht unter einem zweiten Einstrahlwinkelbereich ($\Delta\alpha_2$) auf einen zweiten Oberflächenbereich (D) der Oberfläche des Bands (B) emittiert und die erste Lichtquelle (1, 1') und die zweite Lichtquelle (2, 2') abwechselnd gepulst mit einer vorgegebenen Pulsfrequenz (f) betrieben werden, so dass die Oberfläche des Bands (B) abwechselnd mit der Pulsfrequenz (f) in dem ersten Oberflächenbereich (H) und dem zweiten Oberflächenbereich (D) bestrahlt wird und der von der ersten Lichtquelle (1, 1') bestrahlte erste Oberflächenbereich (H) von dem Inspekteur (I) über einen Spiegel (4, 4') im Hellfeld und der von der zweiten Lichtquelle (2,2') bestrahlte zweite Oberflächenbereich (D) von dem Inspekteur (I) über den Spiegel (4, 4') im Dunkelfeld beobachtet werden kann, wobei die Beobachtung des ersten Oberflächenbereichs (H) und des zweiten Oberflächenbereichs (D) durch das menschliche Auge des Inspekteurs (I) und ohne Zuhilfenahme einer Kamera erfolgt.

2. Verfahren nach einem der voranstehenden Ansprüche, **dadurch gekennzeichnet, dass** von dem Inspekteur (I) sowohl die Unterseite als auch die Oberseite des Bands (B) beobachtet wird, wofür sowohl an der Unterseite als auch an der Oberseite des Bands (B) jeweils zumindest eine erste Lichtquelle (1, 1') und eine zweite Lichtquelle (2, 2') sowie ein Spiegel (4, 4') angeordnet sind.

3. Verfahren nach einem der voranstehenden Ansprüche, **dadurch gekennzeichnet, dass** der erste Oberflächenbereich (H) zumindest teilweise mit dem zweiten Oberflächenbereich (D) überlappt.

4. Verfahren nach einem der voranstehenden Ansprüche, **dadurch gekennzeichnet, dass** durch eine dritte Lichtquelle (3, 3') unter einem dritten Einstrahlwinkelbereich ($\Delta\alpha_3$) ein dritter Oberflächenbereich (M) der Oberfläche des Bands (B) bestrahlt und von dem Inspekteur (I) über den Spiegel (4, 4') im Dunkelfeld beobachtet wird, wobei der dritte Einstrahlwinkelbereich ($\Delta\alpha_3$) bevorzugt zwischen 5° und 45° liegt.

5. Verfahren nach Anspruch 4, **dadurch gekennzeichnet, dass** das von der dritten Lichtquelle (3, 3'; 3a, 3a') eingestrahlte Licht gepulst ist und eine schräg auf eine Oberfläche des Bands (B) gerichtete Strahlungsrichtung aufweist und die Strahlungsrichtung eine Komponente in oder entgegen der Bandlaufrichtung (v) hat.

6. Verfahren nach Anspruch 5, **dadurch gekennzeichnet, dass** der dritte Oberflächenbereich (M) zumindest teilweise mit dem ersten Oberflächenbereich (H) und/oder mit dem zweiten Oberflächenbereich (D) überlappt.

7. Verfahren nach einem der voranstehenden Ansprüche, **dadurch gekennzeichnet, dass** das Band (B) mit einer vorgegebenen Bandgeschwindigkeit bewegt wird, wobei die Pulsfrequenz an die Bandgeschwindigkeit anpassbar ist und bevorzugt im Bereich von 70 Hz bis 400 Hz liegt.

8. Vorrichtung (10, 10') zur Inspektion wenigstens einer Oberfläche eines sich in einer Bandlaufrichtung (v) bewegenden Bands (B), insbesondere eines Stahlbands, mit wenigstens einer ersten Lichtquelle (1, 1') und einer zweiten Lichtquelle (2, 2'), wobei die erste Lichtquelle (1, 1') dazu eingerichtet ist, die Oberfläche des Bands (B) unter einem ersten Einstrahlwinkelbereich ($\Delta\alpha_1$) in einem ersten Oberflächenbereich (H) und die zweite Lichtquelle (2, 2') dazu eingerichtet ist, die Oberfläche des Bands (B) unter einem zweiten Einstrahlwinkelbereich ($\Delta\alpha_2$) in einem zweiten Oberflächenbereich (D) zu bestrahlen und die erste Lichtquelle (1, 1') und die zweite Lichtquelle (2, 2') dazu eingerichtet sind, abwechselnd gepulst mit einer vorgegebenen Pulsfrequenz (f) betrieben zu werden, wobei die Pulsfrequenz bevorzugt im Bereich von 70 Hz bis 400 Hz und besonders bevorzugt im Bereich von 100 Hz bis 300 Hz liegt, so dass die Oberfläche des Bands (B) abwechselnd mit der Pulsfrequenz (f) in dem ersten Oberflächenbereich (H) und dem zweiten Oberflächenbereich (D) bestrahlt wird, und ein Spiegel (4, 4') schräg und im Abstand zur Oberfläche des Bands (B) angeordnet ist, über den der von der ersten Lichtquelle (1, 1') bestrahlte erste Oberflächenbereich (H) im Hellfeld und der von der zweiten Lichtquelle (2, 2') bestrahlte zweite Oberflächenbereich (D) im Dunkelfeld durch das menschliche Auge eines Inspekteurs (I) ohne Zuhilfenahme einer Kamera beobachtbar ist.

9. Vorrichtung nach Anspruch 8, **dadurch gekennzeichnet, dass** eine Reflexionsfläche des Spiegels (4, 4') mit der Oberfläche des Bands (B) einen Winkel im Bereich von 30° bis 60° und insbesondere von 45° einschließt und/oder dass der erste Einstrahlwinkelbereich ($\Delta\alpha_1$) zwischen 10° und 50° liegt und/oder der zweite Einstrahlwinkelbereich ($\Delta\alpha_2$) zwischen 60° und 90° liegt.

10. Vorrichtung nach einem der Ansprüche 8 oder 9, **gekennzeichnet durch** eine dritte Lichtquelle (3, 3'), dazu eingerichtet ist, unter einem dritten Einstrahlwinkelbereich ($\Delta\alpha_3$) gepulstes Licht auf einen dritten Oberflächenbereich (M) der Oberfläche des Bands (B) zu strahlen, wobei das von der dritten Lichtquelle (3, 3'; 3a, 3a') eingestrahlte Licht eine schräg auf eine Oberfläche des Bands (B) gerichtete Strahlungsrichtung aufweist und die Strahlungsrichtung eine Komponente in oder entgegen der Bandlaufrichtung (v) hat.

11. Vorrichtung nach einem der Ansprüche 8 bis 10, **dadurch gekennzeichnet, dass** die Vorrichtung (10, 10') sowohl an der Oberseite des Bands (B) als auch an der Unterseite des Bands angeordnet ist.

12. Vorrichtung nach einem der Ansprüche 8 bis 11, wobei die erste Lichtquelle (1, 1') und die zweite Lichtquelle (2, 2') und die optional vorhandene dritte Lichtquelle (3, 3') dazu eingerichtet sind, abwechselnd in einem Stroboskopbetrieb gepulst mit einer vorgegebenen Pulslänge (t) im Bereich von 30 µs bis 100 µs betrieben zu werden.

13. Vorrichtung nach einem der Ansprüche 8 bis 12, **dadurch gekennzeichnet, dass** die erste Lichtquelle (1, 1') und die zweite Lichtquelle (2, 2') sowie optional eine dritte Lichtquelle (3, 3') oder jede weitere Lichtquelle (3a, 3a') eine Mehrzahl von LED-Lichtleisten (7) mit mehreren, im Abstand zueinander angeordnete LEDs (8) umfasst, und die LED-Lichtleisten (7) jeweils parallel und in einem vorgegebenen Abstand zur Oberfläche des Bands (B) verlaufen, wobei die LED-Lichtleisten (7) der ersten und der zweiten Lichtquelle (1, 1'; 2, 2') jeweils in einer quer zur Bandlaufrichtung (v) des Bands (B) verlaufenden Richtung hintereinander angeordnet sind, und der von der ersten und der zweiten Lichtquelle (1, 1'; 2, 2') emittierte Lichtstrahl eine quer zur Bandlaufrichtung (v) des Bands (B) verlaufende Richtungskomponente umfasst und/oder dass die LED-Lichtleisten (7) der dritten Lichtquelle (3, 3') in Bandlaufrichtung (v) des Bands (B) hintereinander angeordnet sind, wobei der von der dritten Lichtquelle (3, 3') emittierte Lichtstrahl eine in oder entgegen der Bandlaufrichtung (v) verlaufende Richtungskomponente umfasst.

14. Vorrichtung nach Anspruch 13, **dadurch gekennzeichnet, dass** jede LED-Lichtleiste (7) einen Shutter (9) aufweist, der ein Sichtfeld des Inspekteurs (I) zu den LEDs (8) der Lichtleiste (5) abdeckt und dadurch eine Blendung des Inspekteurs (I) verhindert.

**Claims**

1. Method for inspecting at least one surface of a strip (B) moving in a strip running direction (v) by an inspector (I), wherein the surface of the strip (B) is irradiated with at least a first light source (1, 1') and a second light source (2, 2') and wherein the first light source (1, 1') emits light at a first irradiation angle range ($\Delta\alpha_1$) onto a first surface region (H) and the second light source (2, 2') emits light at a second irradiation angle range ($\Delta\alpha_2$) onto a second surface region (D) of the surface of the strip (B), and the first light source (1, 1') and the second light source (2, 2') are alternately operated in pulsed mode at a predetermined pulse frequency (f), so that the surface of the strip (B) is irradiated alternately at the pulse frequency (f) in the first surface region (H) and the second surface region (D) and the first surface region (H) irradiated by the first light source (1, 1') is viewed by the inspector (I) via a mirror (4, 4') in bright field and the second surface region (D) irradiated by the second light source (2, 2') can be observed by the inspector (I) via the mirror (4, 4') in the dark field, wherein the observation of the first surface region (H) and the second surface region (D) is carried out by the human eye of the inspector (I) and without the aid of a camera.

**2.** Method according to one of the preceding claims, **characterized in that** the inspector (I) observes both the underside and the top side of the strip (B), for which purpose at least one first light source (1, 1') and one second light source (2, 2') as well as a mirror (4, 4') are arranged both on the underside and on the top side of the strip (B).

**3.** Method according to one of the preceding claims, **characterised in that** the first surface region (H) at least partially overlaps with the second surface region (D).

**4.** Method according to one of the preceding claims, **characterised in that** a third surface region (M) of the surface of the strip (B) is irradiated by a third light source (3, 3') under a third irradiation angle range ($\Delta\alpha_3$) and is observed by the inspector (I) via the mirror (4, 4') in the dark field, the third irradiation angle range ($\Delta\alpha_3$) preferably lying between 5° and 45°.

**5.** Method according to claim 4, **characterised in that** the light irradiated by the third light source (3, 3'; 3a, 3a') is pulsed and has a radiation direction directed obliquely onto a surface of the strip (B) and the radiation direction has a component in or against the strip running direction (v).

**6.** Method according to claim 4, **characterised in that** the third surface region (M) at least partially overlaps with the first surface region (H) and/or with the second surface region (D).

**7.** Method according to one of the preceding claims, **characterised in that** the strip (B) is moved at a predetermined strip speed, wherein the pulse frequency is adaptable to the strip speed and preferably is lying in the range of 70 Hz to 400 Hz.

**8.** Device (10, 10') for inspecting at least one surface of a strip (B), in particular a steel strip, moving in a strip running direction (v), having at least a first light source (1, 1') and a second light source (2, 2'), the first light source (1, 1') being arranged to irradiate the surface of the strip (B) at a first irradiation angle range ($\Delta\alpha_1$) in a first surface region (H) and the second light source (2,2') being arranged to irradiate the surface of the strip (B) at a second irradiation angle range ($\Delta\alpha_2$) in a second surface region (D), and the first light source (1, 1') and the second light source (2, 2') are arranged to be operated alternately in pulsed mode at a predetermined pulse frequency (f), wherein the pulse frequency is preferably in the range of 70 Hz to 400 Hz and particularly preferably in the range of 100 Hz to 300 Hz, so that the surface of the strip (B) is irradiated alternately with the pulse frequency (f) in the first surface region (H) and the second surface region (D), and a mirror (4, 4') is arranged obliquely and at a distance from the surface of the strip (B), via which the first surface region (H) irradiated by the first light source (1, 1') can be observed in bright field and the second surface region (D) irradiated by the second light source (2, 2') can be observed in dark field by the human eye of an inspector (I) without the aid of a camera.

**9.** Device according to claim 8, **characterized in that** a reflection surface of the mirror (4, 4') encloses an angle in the range of 30° to 60° and in particular of 45° with the surface of the strip (B) and/or that the first irradiation angle range ($\Delta\alpha_1$) lies between 10° and 50° and/or the second irradiation angle range ($\Delta\alpha_2$) lies between 60° and 90°.

**10.** Device according to any one of claims 8 or 9, **characterized by** a third light source (3, 3') arranged to irradiate pulsed light at a third irradiation angle range ($\Delta\alpha_3$) onto a third surface region (M) of the surface of the strip (B), wherein the light irradiated by the third light source (3, 3'; 3a, 3a') has a radiation direction directed obliquely onto a surface of the strip (B) and the radiation direction has a component in or opposite to the strip running direction (v).

**11.** Device according to any one of claims 8 to 10, **characterized in that** the device (10, 10') is arranged both on the upper side of the strip (B) and on the lower side of the strip.

**12.** Device according to any one of claims 8 to 11, wherein the first light source (1, 1') and the second light source (2, 2') and the optionally present third light source (3, 3') are arranged to be alternately operated in a pulsed stroboscopic mode with a predetermined pulse length (t) in the range from 30 $\mu$s to 100 $\mu$s.

**13.** Device according to any one of claims 8 to 12, **characterized in that** the first light source (1, 1') and the second light source (2,2') and optionally a third light source (3, 3') or each further light source (3a, 3a') comprise a plurality of LED light strips (7) with a plurality of LEDs (8) arranged at a distance from one another, and the LEDs (8) arranged at a distance from one another, and the LED light strips (7) each run parallel to and at a predetermined distance from the surface of the strip (B), wherein the LED light strips (7) of the first and second light sources (1, 1'; 2, 2') are each arranged one behind the other in a direction running transversely to the running direction (v) of the strip (B), and the light emitted by the first and the second light source (1, 1'; 2, 2') is comprising a directional component running transversely to the running direction (v) of the strip (B) and/or **in that** the LED light strips (7) of the third light source (3, 3') are arranged one behind the other in the running direction (v) of the strip (B), wherein the light beam emitted by the third light source (3, 3') is comprising a directional component running in or counter to the running direction (v) of the strip.

14. Device according to claim 13, **characterised in that** each LED light strip (7) has a shutter (9) which covers a field of view of the inspector (I) to the LEDs (8) of the light strip (5) and thereby prevents glare of the inspector (I).


**Revendications**

1. Procédé d'inspection d'au moins une surface d'une bande (B) se déplaçant dans une direction de défilement de bande (v) par un inspecteur (I), dans lequel la surface de la bande (B) est irradiée par au moins une première source de lumière (1, 1') et une deuxième source de lumière (2, 2') et dans lequel la première source de lumière (1, 1') émet de la lumière selon une première plage d'angles d'incidence ($\Delta\alpha_1$) sur une première zone de surface (H) et la deuxième source de lumière (2, 2') émet de la lumière selon une deuxième plage d'angles d'incidence ($\Delta\alpha_2$) sur une deuxième zone de surface (D) de la surface de la bande (B) et la première source de lumière (1, 1') et la deuxième source de lumière (2, 2') fonctionnent en alternance de manière pulsée avec une fréquence d'impulsion (f) spécifiée de sorte que la surface de la bande (B) est irradiée en alternance avec la fréquence d'impulsion (f) dans la première zone de surface (H) et dans la deuxième zone de surface (D) et la première zone de surface (H) irradiée par la première source de lumière (1, 1') peut être observée par l'inspecteur (1) par l'intermédiaire d'un miroir (4, 4') dans le champ clair et la deuxième zone de surface (D) irradiée par la deuxième source de lumière (2, 2') peut être observée par l'inspecteur (I) par l'intermédiaire du miroir (4, 4') dans le champ sombre, dans lequel l'observation de la première zone de surface (H) et de la deuxième zone de surface (D) est effectuée par l'œil humain de l'inspecteur (I) et sans recours à une caméra.

2. Procédé selon la revendication précédente, **caractérisé en ce qu'**à la fois le côté inférieur et le côté supérieur de la bande (B) sont observés par l'inspecteur (I), respectivement au moins une première source de lumière (1, 1') et une deuxième source de lumière (2,2') ainsi qu'un miroir (4, 4') étant disposés à cet effet à la fois sur le côté inférieur et sur le côté supérieur de la bande (B).

3. Procédé selon l'une quelconque des revendications précédentes, **caractérisé en ce que** la première zone de surface (H) chevauche au moins en partie la deuxième zone de surface (D).

4. Procédé selon l'une quelconque des revendications précédentes, **caractérisé en ce qu'**une troisième zone de surface (M) de la surface de la bande (B) est irradiée par une troisième source de lumière (3, 3') selon une troisième plage d'angles d'incidence ($\Delta\alpha_3$) et est observée par l'inspecteur (I) par l'intermédiaire du miroir (4, 4') dans le champ sombre, dans lequel la troisième plage d'angles d'incidence ($\Delta\alpha_3$) est comprise de manière préférée entre 5° et 45°.

5. Procédé selon la revendication 4, **caractérisé en ce que** la lumière émise par la troisième source de lumière (3, 3' ; 3a, 3a') est pulsée et présente une direction de rayonnement dirigée à l'oblique sur une surface de la bande (B) et la direction de rayonnement a une composante dans la direction de défilement de bande (v) ou dans le sens opposé à celle-ci.

6. Procédé selon la revendication 5, **caractérisé en ce que** la troisième zone de surface (M) chevauche au moins en partie la première zone de surface (H) et/ou la deuxième zone de surface (D).

7. Procédé selon l'une quelconque des revendications précédentes, **caractérisé en ce que** la bande (B) est déplacée avec une vitesse de bande spécifiée, dans lequel la fréquence d'impulsion peut être adaptée à la vitesse de bande et se situe de manière préférée dans la plage de 70 Hz à 400 Hz.

8. Dispositif (10, 10') d'inspection d'au moins une surface d'une bande (B) se déplaçant dans une direction de défilement de bande (v), en particulier d'une bande en acier, avec au moins une première source de lumière (1, 1') et une deuxième source de lumière (2, 2'), dans lequel la première source de lumière (1, 1') est mise au point pour irradier la surface de la bande (B) selon une première plage d'angles d'incidence ($\Delta\alpha_1$) dans une première zone de surface (H) et la deuxième source de lumière (2, 2') est mise au point pour irradier la surface de la bande (B) selon une deuxième plage d'angles d'incidence ($\Delta\alpha_2$) dans une deuxième zone de surface (D) et la première source de lumière (1, 1') et la deuxième source de lumière (2, 2') sont mises au point pour fonctionner en alternance de manière pulsée avec une fréquence d'impulsion (f) spécifiée, dans lequel la fréquence d'impulsion se situe de manière préférée dans la plage de 70 Hz à 400 Hz et de manière particulièrement préférée dans la plage de 100 Hz à 300 Hz de sorte que la surface de la bande (B) est irradiée en alternance avec la fréquence d'impulsion (f) dans la première zone de surface (H) et dans la deuxième zone de surface (D) et un miroir (4, 4') est disposé à l'oblique et à distance par rapport à la surface de la bande (B), par l'intermédiaire duquel la première zone de surface (H) irradiée par la première source de lumière (1, 1') peut être observée dans le champ clair et la deuxième zone de surface (D) irradiée par la deuxième source de lumière (2, 2') peut être observée respectivement dans le champ sombre par l'œil humain d'un inspecteur (I) sans recours à une caméra.

**9.** Dispositif selon la revendication 8, **caractérisé en ce qu'**une face réfléchissante du miroir (4, 4') forme avec la surface de la bande (B) un angle dans la plage de 30° à 60° et en particulier de 45°, et/ou que la première plage d'angles d'incidence ($\Delta\alpha_1$) est comprise entre 10° et 50° et/ou la deuxième plage d'angles d'incidence ($\Delta\alpha_2$) est comprise entre 60° et 90°.

**10.** Dispositif selon l'une quelconque des revendications 8 ou 9, **caractérisé par** une troisième source de lumière (3, 3') qui est mise au point pour émettre selon une troisième plage d'angles d'incidence ($\Delta\alpha_3$) de la lumière pulsée sur une troisième zone de surface (M) de la surface de la bande (B), dans lequel la lumière émise par la troisième source de lumière (3, 3' ; 3a, 3a') présente une direction de rayonnement dirigé sur une surface de la bande (B) et le dispositif de rayonnement a une composante dans la direction de défilement de bande (v) ou dans le sens opposé à celle-ci.

**11.** Dispositif selon l'une quelconque des revendications 8 à 10, **caractérisé en ce que** le dispositif (10, 10') est disposé à la fois sur le côté supérieur de la bande (B) et sur le côté inférieur de la bande.

**12.** Dispositif selon l'une quelconque des revendications 8 à 11, dans lequel la première source de lumière (1, 1') et la deuxième source de lumière (2, 2') et la troisième source de lumière (3, 3') présente en option sont mises au point pour fonctionner en alternance dans un mode de stroboscope de manière pulsée avec une longueur d'impulsions (t) spécifiée dans la plage de 30 μs à 100 μs.

**13.** Dispositif selon l'une quelconque des revendications 8 à 12, **caractérisé en ce que** la première source de lumière (1, 1') et la deuxième source de lumière (2, 2') ainsi qu'en option une troisième source de lumière (3, 3') ou toute autre source de lumière (3a, 3a') comprennent une multitude de baguettes lumineuses à DEL (7) avec plusieurs DEL (8) disposées à distance les unes par rapport aux autres, et les baguettes lumineuses à DEL (7) s'étendent respectivement de manière parallèle et à une distance spécifiée par rapport à la surface de la bande (B), dans lequel les baguettes lumineuses à DEL (7) de la première et de la deuxième source de lumière (1, 1', 2, 2') sont disposées les unes derrière les autres respectivement dans une direction s'étendant de manière transversale par rapport à la direction de défilement de bande (v) de la bande (B), et le faisceau de lumière émis par la première et la deuxième source de lumière (1, 1' ; 2, 2') comprend une composante directionnelle s'étendant de manière transversale par rapport à la direction de défilement de bande (v) de la bande (B), et/ou que les baguettes lumineuses à DEL (7) de la troisième source de lumière (3, 3') sont disposées les unes derrière les autres dans la direction de défilement de bande (v) de la bande (B), dans lequel le faisceau de lumière émis par la troisième source de lumière (3, 3') comprend une composante directionnelle s'étendant dans la direction de défilement de bande (v) ou dans le sens opposé à celle-ci.

**14.** Dispositif selon la revendication 13, **caractérisé en ce que** chaque baguette lumineuse à DEL (7) présente un obturateur (9), qui recouvre un champ de vision de l'inspecteur (I) en direction des DEL (8) de la baguette lumineuse (5) et empêche ainsi un éblouissement de l'inspecteur (I).

Fig. 1

**Fig. 2**

**Fig. 3**

**Fig. 4**

EP 3 712 600 B1

EP 3 712 600 B1

**Fig. 5**

**Fig. 6**

EP 3 712 600 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19720308 A
- US 5087822 A
- US 6327374 B1
- US 4629319 A